# EUROPÄISCHE PATENTANMELDUNG

(11) **EP 4 821 758 A1**
(43) Veröffentlichungstag der Anmeldung: **14.10.2026**
(21) Anmeldenummer: 25186978.0
(22) Anmeldetag: 02.07.2025
(51) Int. Cl.: B60P 3/00, G06Q 10/08, G06Q 10/0836, G07F 7/06, G07F 17/12

(54) **MOBILE DEPOTEINRICHTUNG ZUR LAGERUNG UND BEREITSTELLUNG VON PAKETEN UND VERFAHREN ZUM BETREIBEN EINER MOBILEN DEPOTEINRICHTUNG**

(30) Priorität: 07.04.2025 EP 25168920
(71) Anmelder: Innovative Robot Delivery GmbH, 53121 Bonn (DE)
(72) Erfinder: Boekels, Lothar, 41379 Brüggen (DE); Schmidtke, Leon, 51063 Köln (DE)
(74) Vertreter: Jostarndt Patentanwalts-AG

(57) **Zusammenfassung**

Die Erfindung betrifft eine mobile Depoteinrichtung (100) für eine Lagerung und Bereitstellung mehrerer Pakete (500) innerhalb eines vorgesehenen Übergabezeitraums an einem Standort,
wobei die mobile Depoteinrichtung (100) von einer ersten Seite (A100) beladbar ist und die Pakete (500) je von einer zweiten Seite (B100), entnehmbar sind, wobei die zweite Seite (B100) verschieden von der ersten Seite (A100) ist, wobei die mobile Depoteinrichtung zwischen einem Depotmodus zur Be- und Entladung, insbesondere durch wenigstens einen Werker (150), und einem Abholmodus, in dem wenigstens ein Paket (500) an einen Empfänger (550) und/oder Kunden übergeben wird, schaltbar ist.

## Beschreibung

Die Erfindung betrifft eine mobile Depoteinrichtung zur Lagerung und Bereitstellung von Paketen sowie ein Verfahren zum Betreiben der mobilen Depoteinrichtung.

### STAND DER TECHNIK

Im Stand der Technik sind Systeme bekannt, die es ermöglichen, eine Vielzahl von in Paketen befindlichen Warenobjekten an eine Vielzahl von Empfängern auszuliefern beziehungsweise Pakete von einer Vielzahl von Versendern entgegenzunehmen.

Es besteht ein großes Bedürfnis, den hierdurch verursachten ökologischen Fußabdruck zu verringern.

Bekannte Lösungen zielen auf eine Verbesserung der Transport- und Übergabelogistik ab, zum Beispiel durch den Einsatz elektronischer Paketfachanlagen, mittels derer Übergaben von Paketen erfolgen.

Andere bekannte Lösungen zielen auf den Einsatz von Mehrwegbehältern beim Paketversand ab. Bisher sind diese Lösungen daran gescheitert, dass kein geschlossener Kreislauf der Mehrwegbehälter von Versendern zu Empfängern etabliert werden konnte, da die Rücklaufquote der Mehrwegbehälter meist zu gering war. Hier setzt die im Folgenden beschriebene Erfindung an.

### KURZDARSTELLUNG DER ERFINDUNG

Aufgabe der Erfindung ist es, eine mobile Depoteinrichtung zur Lagerung und Bereitstellung von Paketen bereitzustellen, die besonders einfach (insbesondere mit Mehrwegbehältern) beladen werden kann und mit der ein Empfänger besonders leicht und ergonomisch Zugriff auf das Paket erhält.

Erfindungsgemäß wird diese Aufgabe durch eine mobile Depoteinrichtung mit den Merkmalen des unabhängigen Anspruches 1 gelöst. Vorteilhafte Weiterbildungen der Vorrichtung ergeben sich aus den Unteransprüchen 2-12. Die Aufgabe wird ferner durch ein Verfahren nach Anspruch 13 gelöst. Eine vorteilhafte Weiterbildung des Verfahrens ergibt sich aus dem Unteranspruch 14.

Der Erfindung liegt die Erkenntnis zu Grunde, dass die Platzausnutzung und Nutzbarkeit einer mobilen Depoteinrichtung stark erhöht werden kann, wenn eine erste Seite, von der die Depoteinrichtung beladen wird, und eine zweite Seite, von der Empfänger ihre Pakete abholen können, verschieden sind. Beispielsweise kann die Stirnfläche eines Anhängers zur Beladung genutzt werden und zwei einander gegenüberliegende Seitenflächen zur Entnahme von auf der jeweiligen Seite verteilten Paketen genutzt werden. So entfällt nicht nur eine sonst zur Beladung des Anhängers (der Depoteinrichtung) erforderliche Transportgasse. Mit den im Folgenden beschriebenen Ausführungsformen können auch sämtliche Lagerpositionen einer Depoteinrichtung auf einfache und besonders schnelle Weise von der ersten Seite aus befüllt werden. Auch können auf beiden Seiten mehrere Empfänger gleichzeitig ihre Pakete abholen, wodurch Wartezeiten zu Stoßzeiten reduziert werden.

Es wird beispielsweise eine mobile Depoteinrichtung für eine Lagerung und Bereitstellung mehrerer Pakete innerhalb eines vorgesehenen Übergabezeitraums an einem Standort bereitgestellt mit
- einer Vielzahl von Lagerpositionen,
- einem Verbindungsmittel zum Verbinden der Depoteinrichtung mit einem Zuordnungsmittel für eine Zuordnung von Paketidentifikationsmerkmalen zu Lagerpositionen, wobei die mobile Depoteinrichtung von einer ersten Seite beladbar ist und wobei die Pakete je von einer zweiten Seite, entnehmbar sind, wobei die zweite Seite verschieden von der ersten Seite ist, insbesondere wobei die erste Seite und die zweite Seite in einem 90°-Winkel zueinander angeordnet sind. Diese Einfachheit ermöglicht eine hohe Zuverlässigkeit und eine sehr wirtschaftliche Umsetzung.

Der Begriff "mobil" ist vorliegend nicht darauf beschränkt, dass die Depoteinrichtung selbstfahrend ist. Vielmehr beinhaltet der Begriff mobil im Sinne der Erfindung, die Depoteinrichtung so auszugestalten, dass ihr Standort (jederzeit) veränderbar ist. Eine Veränderung des Standortes kann beispielsweise dadurch geschehen, dass die Ausgabeeinheit ein Fahrzeug beziehungsweise ein Bestandteil oder Anhänger eines Fahrzeuges ist oder mittels eines Fahrzeuges transportierbar ist.

Es ist besonders vorteilhaft, die Depoteinrichtung von ihren Abmessungen so zu gestalten, dass sie in einem regulären Straßenverkehr transportierbar und vorzugsweise auf regulären Parkplätzen abstellbar ist. Die Ausgestaltung der Ausgabeeinheit mit entsprechenden Abmessungen ist von vorteilhafter Weise.

In dieser Anmeldung werden unter Paketen beliebige körperliche Gegenstände verstanden, die transportiert werden können und vorzugsweise bestimmte Abmessungen und/oder ein bestimmtes Gewicht nicht überschreiten.

Dabei kommen Gegenstände des täglichen Bedarfs wie Verbrauchsmaterialien oder Lebensmittel ebenso in Frage wie technische Gegenstände und Gerätschaften. Bei den Paketen handelt es sich um unverpackte Gegenstände, in eine Produktverpackung verpackte Gegenstände und in eine zusätzliche Transportverpackung umverpackte Gegenstände, wobei bei verpackten und umverpackten Gegenständen das Paket die Verpackung bzw. Umverpackung und den darin verpackten Gegenstand umfasst. Ebenso ist es zweckmäßig, unverpackte Gegenstände, insbesondere Warenobjekte erfindungsgemäß zu bearbeiten. Briefsendungen sowie Werbematerialien und -prospekte sind gegebenenfalls auch Pakete im Sinne dieser Anmeldung. Eine Umverpackung kann dabei entweder anteilig oder vollständig vorgenommen werden. Beispielsweise sind (oben) geöffnete Transportboxen von dem Begriff der Umverpackung ebenfalls umfasst.

Zur Lagerung und zur Bereitstellung von Paketen ist eine Übergabe der Pakete an die Depoteinrichtung oder durch die Depoteinrichtung erforderlich, wobei die Übergabe insbesondere eine Einlieferung und/oder eine Ausgabe der Pakete sein kann.

Die vorliegende Anmeldung betrifft Übergaben von Paketen an Empfänger und/oder Übergaben von Paketen durch Einlieferer. Sofern nicht jeweils spezifiziert ist, dass es sich um eine Übergabe an einen Empfänger handelt, sind auch Übergaben von einem Einlieferer mit umfasst. Ebenso ist dann, wenn nicht jeweils spezifiziert ist, dass es sich um eine Übergabe durch einen Einlieferer handelt, auch eine Übergabe an einen Empfänger mit umfasst. Übergaben durch einen Einlieferer werden in der vorliegenden Anmeldung auch als Einlieferung oder als Annahme bezeichnet, Übergaben an Empfänger auch als Auslieferung.

Sowohl natürliche Personen als auch technische Einheiten können Einlieferer im Kontext der vorliegenden Anmeldung sein. Natürliche Personen oder technische Einheiten, die Pakete an die Depoteinrichtung übergeben, werden im Kontext der vorliegenden Anmeldung auch als Versender bezeichnet. Versender bezeichnet insbesondere solche Einlieferer, die einen Transport von Paketen, gegebenenfalls einschließlich einer Abholung, ggf. die Bezahlung beauftragen, ggf. auch an einem Standort, an dem keine Depoteinrichtung vorhanden ist. Die vorliegende Anmeldung umfasst Ausführungsformen, bei denen die Einlieferer von Paketen Versender sind, mit. Empfänger im Sinne der vorliegenden Erfindung sind Einheiten, an die die mobile Depoteinrichtung Pakete oder sonstige Gegenstände übergibt, beziehungsweise übergeben kann. Sowohl natürliche Personen als auch technische Einheiten können Empfänger im Kontext der vorliegenden Anmeldung sein.

Die mobile Depoteinrichtung weist beispielsweise übereinander angeordnete Lagerpositionsschächte auf, die entlang der zweiten Seite orientiert sind. Dies erlaubt sowohl ein besonders einfaches Beladen der Lagerposition von der ersten Seite aus, ohne dass die Lagerpositionen aus der Depoteinrichtung herausgenommen werden müssen, indem beispielsweise Pakete in die Lagerpositionsschächte eingebracht und durchgeschoben werden. Ein Vorteil dieser Anordnung der Lagerpositionsschächte (auch Magazinsystem genannt) liegt in seiner Einfachheit: ohne komplexe Softwarelogik, ohne sicherheitskritische Bewegungen und mit einem hohen Maß an Modularität kann es leicht skaliert und an verschiedene Anforderungen angepasst werden. Auch der Wartungsaufwand ist gering, da nahezu keine verschleißintensiven Komponenten enthalten sind. Dies macht das System attraktiv für Einsatzorte mit begrenztem Servicezugang oder für robuste Outdoor-Anwendungen.

In einer beispielhaften Weiterbildung dieser Ausführungsform weisen die Lagerpositionsschächte Rückhalteschienen zum Eingriff in Mehrwegbehälter auf, wobei ein in einem jeweiligen Mehrwegbehälter gelagertes Paket in Richtung der zweiten Seite entnehmbar ist und der Mehrwegbehälter in Richtung der ersten Seite entnehmbar ist. Es ist möglich L-förmige Tablare (oder "Trays") anstelle der Mehrwegbehälter zu nutzen. Die Verwendung von Mehrwegbehältern (oder Tablaren) liefert dabei eine Vielzahl von Vorteilen. Nicht nur kann Verpackungsmaterial durch ein Einsparen von Umverpackungen gespart werden. Die Rücklaufquote der Mehrwegbehälter wird auch auf nahezu 100% forciert, da die Rückhalteschienen eine Entnahme der Mehrwegbehälter in Richtung der zweiten Seite vollständig verhindern. Zudem kann die Größe der Lagerpositionsschächte auf die Größe der Mehrwegbehälter (oder anders herum) so abgestimmt werden, dass die Seitenwände der Mehrwegbehälter zugleich als Begrenzung einer Lagerposition dienen. Damit verhindern die Mehrwegbehälter zugleich, dass ein Empfänger unzulässigerweise Zugriff auf eine benachbarte Lagerposition erhält. Die L-Form der Tablare dient hierbei demselben Zweck, wobei mit dieser Variante insgesamt noch weniger Material verwendet werden muss und somit das Gesamtgewicht der Depoteinrichtung reduziert werden kann.

Beispielsweise weist die Depoteinrichtung ausfahrbare Standfüße auf, die die Depoteinrichtung insbesondere in einem Belademodus neigen, sodass die Depoteinrichtung ein Gefälle von der ersten Seite zur einer ihr gegenüberliegenden Seite aufweist. Die Standfüße sind unter der Depoteinrichtung angeordnet. Wird die Depoteinrichtung beladen, so werden diejenigen Standfüße, die sich näher an der ersten Seite befinden, weiter ausgefahren als diejenigen Standfüße, die an der gegenüberliegenden Seite befindlich sind. So können Pakete und/oder Mehrwegbehälter beim Beladen in den jeweiligen Lagerpositionsschacht eingebracht werden, von wo aus sie dank der Schwerkraft automatisch bis zu ihrer Lagerposition durchrutschen. Dazu können die Lagerpositionsschächte einen besonders geringen Reibungswiderstand aufweisen. Es ist jedoch bevorzugt, gemäß einer Weiterbildung dieser Ausführungsform in den Lagerpositionsschächten Rollen anzuordnen, die ein Durchrutschen der Pakete/Mehrwegbehälter erleichtern. Die Rollen können, nachdem die Depoteinrichtung beladen wurde, beispielsweise arretiert werden. Leichter ist es jedoch, wenn die erste Seite nach dem Beladevorgang geschlossen wurde, Trenner zwischen den Positionen auszufahren oder sicherzustellen, dass sämtliche Positionen der Depoteinrichtungen mit Mehrwegbehältern gefüllt sind, sodass sie sich aufgrund des Platzmangels nicht mehr verschieben lassen.

Beispielsweise weist die Depoteinrichtung eine Fördervorrichtung zum Transport von Paketen und/oder Mehrwegbehältern entlang der Lagerpositionsschächte auf. Dies ist bei der Beladung dienlich und erlaubt es, sicherzustellen, dass der Platz in der Depoteinrichtung bestmöglich ausgenutzt wird. Dabei kann eine Fördervorrichtung mehrere Lagerpositionsschächte zugleich (simultan) befüllen. Vorzugsweise umfasst die Fördervorrichtung ein Förderband oder eine Schnecke. Dies erlaubt eine besonders einfache Implementierung.

Beispielsweise kommt bei der Beladung der Depoteinrichtung eine Einlagerungshilfseinrichtung zum Einsatz. Gemäß einer Ausbildung der Depoteinrichtung weist die Depoteinrichtung eine an der ersten Seite angeordnete Einlagerungshilfseinrichtung auf, wobei die Einlagerungshilfseinrichtung geeignet ist, ein Paket und/oder einen Mehrwegbehälter an einen Lagerpositionsschacht zu übergeben.

Beispielsweise ist die Depoteinrichtung alternativ zu vorgenannter Variante an der ersten Seite mit einer Einlagerungshilfseinrichtung lediglich verbindbar, wobei die Einlagerungshilfseinrichtung geeignet ist, ein Paket und/oder einen Mehrwegbehälter an einen Lagerpositionsschacht zu übergeben.

In beiden Fällen ist die Einlagerungshilfseinrichtung jeweils in der Lage, sämtliche an der ersten Seite beginnende Lagerpositionsschächte anzusteuern und dort das Paket und/oder den Mehrwegbehälter einzubringen. Es ist möglich, dass die Einlagerungshilfseinrichtung mit einer Mehrwegbehälterlager verbindbar ist und bei einem Einlagerungsvorgang einen (an die Größe des einzulagernden Pakets angepassten) Mehrwegbehälter bereitstellt, auf den das Paket aufgelegt wird.

Beispielsweise weist die Einlagerungshilfseinrichtung eine Schleuse zur Annahme eines Pakets auf, wobei die Schleuse vorzugsweise Mittel zur Erfassung wenigstens eines Paketidentifikationsmerkmals aufweist, wobei das Mittel zur Erfassung mit dem Verbindungsmittel und/oder dem Zuordnungsmittel verbindbar ist. Die Verwendung einer Schleuse erleichtert insbesondere die Bedienung und bedingt, dass sämtliche einzulagernde Pakete zunächst durch die Schleuse müssen, wo ein Paketidentifikationsmerkmal, wie beispielsweise Gewicht, Größe (insbesondere Höhe), ID-Nr. etc., erfasst werden kann. Die Lagerposition, in der das Paket letztlich gelagert wird, wird mittels dem Verbindungsmittel (oder direkt) dem Zuordnungsmittel mitgeteilt und die Lagerposition gespeichert.

Alternativ oder ergänzend sind beispielsweise eine Mehrzahl von Lagerpositionen, vorzugsweise alle Lagerpositionen, zusammenhängend an der ersten Seite aus der Depoteinrichtung herzausziehbar / verfahrbar, insbesondere vollständig. Dies erlaubt es, die Depoteinrichtung in einem Belademodus in einem Few-Shot-Verfahren, insbesondere einem One-Shot-Verfahren, zu beladen. Die Lagerpositionen sind beispielsweise als Lagerregale ausgebildet und werden zur Beladung beispielsweise auf Rollen vollständig auf der ersten Seite aus der Depoteinrichtung herausgefahren. Während des Beladevorgangs kann nun von den Seiten auf die Lagerpositionen zugegriffen werden, wodurch die Beladung vereinfacht und beschleunigt wird. Anschließend werden die Lagerpositionen, insbesondere die Lagerpositionsschächte, vorzugsweise sämtliche Lagerpositionen, in einem einzigen Vorgang zurück in die Depoteinrichtung geschoben.

Beispielsweise ist an der zweiten Seite der Depoteinrichtung ein 2D-Rollo angeordnet, wobei das 2D-Rollo geeignet ist, einem Empfänger einzelne Lagerpositionen zu eröffnen. Die Lamellen der Rollos werden dabei jeweils so angesteuert und verschoben, dass ein genau auf die Lagerposition zugeschnittener Bereich zur zweiten Seite hin geöffnet wird. Dies erlaubt besonders schnelle Entladevorgänge und erhöht sogleich die Sicherheit der gesamten Depoteinrichtung.

Alternativ oder ergänzend weisen beispielsweise einzelne Lagerpositionen und/oder einzelne Mehrwegbehälter einen öffenbaren Verschlussmechanismus auf, insbesondere wobei ein Zustand des Verschlussmechanismus abhängig von einer Authentifizierung eines Empfängers schaltbar ist. Beispielsweise kann es erforderlich sein, einen auf einem Benutzerendgerät angezeigten Code einzugeben oder einen QR-Code als Authentifizierungsnachweis an einem Scanner vorzuzeigen.

Gemäß einem Aspekt der Erfindung wird eine mobile Depoteinrichtung für eine Lagerung und Bereitstellung mehrerer Pakete innerhalb eines vorgesehenen Übergabezeitraums an einem Standort bereitgestellt, mit
- einer Vielzahl von Lagerpositionen,
- einem Verbindungsmittel zum Verbinden der Depoteinrichtung mit einem Zuordnungsmittel für eine Zuordnung von Paketidentifikationsmerkmalen zu Lagerpositionen,

wobei die mobile Depoteinrichtung von einer ersten Seite beladbar ist und die Pakete je von einer zweiten Seite, entnehmbar sind, wobei die zweite Seite verschieden von der ersten Seite ist,
wobei die mobile Depoteinrichtung zwischen einem Depotmodus zur Be- und Entladung, insbesondere durch wenigstens einen Werker, und einem Abholmodus, in dem wenigstens ein Paket an einen Empfänger oder Kunden übergeben wird, schaltbar ist.

Beispielsweise ist die Depoteinrichtung als ein Anhänger, der auf einem Parkplatz abgestellt werden kann, ausgebildet. Solange die Depoteinrichtung außerhalb eines Paketverteilzentrums oder einer vergleichbaren Einrichtung (Depots), in der die mobile Depoteinrichtung mit Paketen beladen wird, ist sie beispielsweise in den Abholmodus geschaltet. Im Paketverteilzentrum wird sie zur Beladung in den Depotmodus geschaltet. Dass sie schaltbar ist, bedeutet, dass die Depoteinrichtung sich (jederzeit) in einem der zwei Modi befindet und reversibel von einem in den anderen überführt werden kann, insbesondere mit vergleichsweise besonders geringem Aufwand.

Vorzugsweise bilden die Lagerpositionen in einer Ausführungsform der Erfindung zwei gegeneinander verschiebbare Regalreihen, wobei die Regalreihen in dem Abholmodus rückseitig nah beieinander, insbesondere aneinander anliegend, angeordnet sind und wobei die Regalreihen in dem Depotmodus so voneinander beabstandet sind, dass eine Beladegasse entsteht, wobei die Lagerpositionen von der Seite der Beladegasse aus befüllbar sind. Die Regalreihen sind zur Modusumschaltung beispielsweise auf Rollen gelagert und manuell oder automatisiert gegeneinander verfahrbar. Die verfahrbaren, rollengelagerten Regalreihen können beispielsweise in beiden Modi durch eine Arretierung, vorzugsweise durch Magnetverschlüsse oder mechanische Rastmechanismen, fixierbar ausgestaltet sein. Beispielsweise sind die Lagerpositionen von der zweiten Seite schließfachartig angeordnet, wie eingangs beschrieben. Hier können zum Beispiel über elektronische Mittel einzelne Fächer (Lagerpositionen) geöffnet werden, nachdem sich ein Empfänger beispielsweise über eine Code-Abfrage an einem Scanner der Depoteinrichtung authentifiziert hat. Im Abholmodus mit rückseitig aneinander anliegend angeordneten Regalreihen wird die mobile Depoteinrichtung durch einen besonders geringen Platzbedarf ausgezeichnet, sodass sie zentral in einer Parklücke aufgestellt werden kann und "beidseitig" (von der jeweils zweiten Seite) an die Lagerpositionen herangetreten werden kann und eine Entnahme eines Pakets ohne Beschädigung eines eventuell auf einem benachbarten Parkplatz stehenden PKWs erfolgt. Im Sinne dieser Anmeldung müssen die Regalreihen sich nicht zwingend berühren, auch wenn sie es können. Ein geringer Abstand zwischen den Regalreihen von beispielsweise bis zu 10 cm ist vom erfinderischen Gedanken unter "nah beieinander" ebenso mitumfasst.

In einer vorteilhaften Weiterbildung ist die Beladegasse im Depotmodus begehbar, sodass ein Werker die Pakete manuell in die Lagerpositionen einlagern kann, wobei die Zuordnung von Paketidentifikationsmerkmalen zu Lagerpositionen erfasst wird. Beispielsweise sind die Lagerpositionen auf der ersten Seite (zur Beladegasse hin) durch einen Werker öffenbar. Die Depoteinrichtung kann zum Beispiel auf dieser Seite ein Rollo aufweisen, dass der Werker im Depotmodus aufsperren kann. Dies ermöglicht dem Werker, die Lagerpositionen von innen zu befüllen.

In einer ergänzenden oder hierzu alternativen Ausbildung weisen die Lagerpositionen Mittel zur Erfassung des Beladungszustands auf, wobei es sich bei den Mitteln zur Erfassung insbesondere um eine Kamera, insbesondere unterstützt durch Machine Vision, eine Lichtschranke, eine Waage oder einen Bewegungssensor handelt. Alternativ kann ein Taster oder vergleichbare Sensorik zum Einsatz kommen.

Gemäß einer Weiterbildung erhält oder ermittelt die mobile Depoteinrichtung den Paketen zugeordnete Lagerpositionen, insbesondere wobei die mobile Depoteinrichtung über wenigstens eines der folgenden Mittel zur Anzeige der Zuordnung verfügt:
- Place by light
- LED-Streifen mit 2D-Ansteuerung
- Nummerierung/Farbliche Hervorhebung der Lagerpositionen
- Display mit Karte der Lagerpositionen
- Laser.

Beispielsweise ermittelt die mobile Depoteinrichtung eine (annähernd) optimale Zuordnung anhand eines Optimierungsalgorithmus. Bei der Beladung wird beispielsweise ein Paketidentifikationsmerkmal eines einzulagernden Pakets erfasst, die zugeordnete Lagerposition empfangen und anschließend eine LED auf der ersten Seite (zur Beladegasse hin) angesteuert, sodass sie zu leuchten beginnt und der Werker sofort weiß, in welche Lagerposition er das Paket einzubringen hat.

In einer alternativen (oder ergänzenden) Ausführungsform der Ausbildung mit Beladegasse kann (auch) ein Shuttle in die Beladegasse fahren, wobei das Shuttle insbesondere automatisiert Pakete in die Lagerpositionen anhand der Zuordnung einbringen kann. Das Shuttle kann sich omnidirektional in sämtliche Richtungen innerhalb der mobilen Depoteinrichtung bewegen. Insbesondere kann das Shuttle in einer Weiterbildung in einer Höhe verfahrbar sein. Das Shuttle ist somit in der Lage, jede Lagerposition individuell anzufahren.

Gemäß einer vorteilhaften Weiterbildung fährt das Shuttle im Depotmodus nicht aus der Beladegasse und ein Eingang zur Beladegasse dient als eine Schleuse zur Annahme der einzulagernden Pakete und/oder zur Ausgabe von nicht abgeholten Paketen und/oder Retouren durch das Shuttle. Hierbei verfügt das Shuttle vorzugsweise über Sensorik zur Erfassung der Schleuse und ist eingerichtet, verkippungs-, verrollungs- und beladungsbedingte Höhenschwankungen auszugleichen.

Das Shuttle der vorgenannten Ausbildungen verbleibt nach Befüllung im Paketverteilungszentrum/Depot und kann für die Beladung mehrerer mobiler Depoteinrichtungen benutzt werden. Beispielsweise kann das Shuttle über integrative oder nachträglich angebrachte Führungen in der Höhe (Z) und Tiefe (X) (der Beladegasse) verfahren werden. Das Einbringen der Pakete in die Lagerpositionen (in Y-Richtung) kann beispielsweise mithilfe folgender Überlegungen erfolgen: Das Shuttle weist beispielsweise an wenigstens einem linearen Führungssystem angeordnete Eingriffselemente auf, wobei die Eingriffselemente mithilfe eines Aktors, aufeinander zu oder voneinander weg bewegt werden können und so in eine Eingreifstruktur an einer jeweiligen Seitenwand eines Pakets oder eines Mehrwegbehälters eingreifen können. Der Aktor ist beispielsweise durch wenigstens einen linearen, rotatorischen, pneumatischen oder magnetischen Aktor realisiert. Auch eine durch einen Motor aktuierte Bewegung ist dabei denkbar. Die Eingriffselemente (oder auch Greifer) können beispielsweise (teilweise) aus einem Stanzblech gefertigt sein, einen zu einer Eingreifstruktur passenden Kopf aufweisen und über eine Mehrzahl pneumatischer Aktoren, die synchron angesteuert werden, gegen einen Anschlag anfahren. Dies stellt eine hohe Präzision beim Einschieben der Trägerelemente in die Lagerpositionen sicher.

Das Shuttle weist wenigstens einen mit wenigstens einem linearen Führungssystem verbundenen Motor auf, um die Eingriffselemente in Richtung der Lagerpositionen (Y) zu verschieben.

Ein Transport der Pakete wird durch das Shuttle innerhalb der Depoteinrichtung unter Berücksichtigung der den jeweiligen Paketen anhand der Paketidentifikationsmerkmale zugeordneten Lagerpositionen gesteuert.

Beispielsweise sind die Eingriffselemente auf wenigstens einem beidseitig auslenkbaren Schlitten angeordnet. Dabei stehen die Eingriffselemente in ausgelenktem Zustand in Einschubrichtung über eine Tragfläche des Shuttles hervor, sodass sie den Spalt zwischen Shuttle und Lagerposition/Eingreifstruktur überbrücken können. Der Schlitten ist beispielsweise auf einer Linearführung gehalten und durch einen Motor angetrieben und wird so beidseitig verfahren. Beispielsweise weist das Shuttle zwei synchron verfahrbare an gegenüberliegenden Seiten des Shuttles befindliche Schlitten auf, an denen jeweils zwei symmetrisch angeordnete Greifer angeordnet sind, die einzeln aufeinander zu oder voneinander weg bewegt werden können.

Beispielsweise weist das Shuttle wenigstens eine Auflagefläche zur Aufnahme eines Pakets oder eines Mehrwegbehälters auf. Wenigstens eine Dimension der Auflagefläche überschreitet dabei in wenigstens einer Richtung des Shuttles vorzugsweise eine Länge der Pakete/Mehrwegbehälter (Trägerelement) in derselben Richtung. Alternativ reicht es aus, dass eine Führung, auf der die Greifer (gegebenenfalls auf einem Schlitten) verfahren werden, die Länge der Mehrwegbehälter in vorbeschriebener Richtung (und Gegenrichtung) so weit überschreitet, dass die Greifer, insbesondere beide Greifer auf einer Seite (insbesondere auf einem gemeinsamen Schlitten) in Richtung und Gegenrichtung in jede auf der respektiven Seite des Mehrwegbehälters befindliche Eingreifstruktur des Trägerelements eingreifen können, sofern das Trägerelement auf dem Shuttle befindlich ist. Beispielsweise weist der Mehrwegbehälter vier Eingreifstrukturen auf, die jeweils in Nähe einer Ecke des Mehrwegbehälters so angeordnet sind, dass bei einem in eine Lagerposition eingeschobenen Mehrwegbehälter nur die dem Shuttle zugewandten Eingreifstrukturen von den der Lagerposition zugewandten Greifern gefasst werden können und dass bei einem auf dem Shuttle (in neutraler zentrierter Position) befindlichen Mehrwegbehälter auf der respektiven Seite des Shuttles jeder der Greifer in der Lage ist in jede der Eingreifstrukturen zu fassen. Es ist zudem möglich zwei Auflageflächen in der Art von Auflageschienen beispielsweise nahe des Rands des Shuttles. Das Shuttle ist dazu eingerichtet, spiegelsymmetrisch angeordnete Eingriffselemente beidseitig zu verschieben. Die Symmetrieachse verläuft dabei entlang der Mitte der Beladegasse verläuft.

Das Shuttle ist beispielsweise auf vertikal ausgerichteten Linearführungen angebracht. Der Antrieb der Linearführung bewirkt dabei eine Veränderung der vertikalen Position des Shuttles. Zur Veränderung der Position des Shuttles werden die vertikal ausgerichteten Linearführungen beispielsweise auf oberhalb und unterhalb an den Seiten der Beladegasse angeordneten Schienen in Richtung der Beladegasse verschoben. Zur Erhöhung der Stabilität dieser Anordnung können die vertikalen Linearführungen beispielsweise über horizontale Segmente miteinander in der Art eines Rahmens verbunden werden. Eine alternative Ausbildung kann beispielsweise eine Zweiteilung des Shuttles bedingen, bei der nur ein oberer Teil, der zur Aufnahme, zum Einschieben in und Herausziehen der Mehrwegbehälter aus den Lagerpositionen geeignet ist, in seiner Höhe verändert werden kann und ein unterer Teil auf Schienen entlang der Beladegasse verschoben wird.

Beispielsweise weisen die Lagerpositionen Mittel zur Arretierung von Mehrwegbehältern auf. Die Mittel sind beispielsweise durch an/auf Tragschienen (oder in der Lagerposition) befestigte passive Verriegelungselemente, vorzugsweise über mechanische Rückstellkraft wirkend, wie etwa hochgebogene Federbleche oder Blattfedern, ausgebildet, die ein Hineinrutschen der Mehrwegbehälter in die Lagerpositionen bei einer Einlagerung erlauben, wobei sie jedoch in dem Moment, indem die Greifer aus der Lagerposition hinausgezogen werden, in ihre Ausgangsposition zurückspringen und die Mehrwegbehälter in den Lagerpositionen fixieren. Bei einer Auslagerung fährt der Greifer an die Mehrwegbehälter heran und verschiebt bei der Anfahrt an den Mehrwegbehälter das Mittel zur Arretierung nach unten und zieht den Mehrwegbehälter über das Mittel zur Arretierung auf das Shuttle. Alternative Mittel zur Arretierung der Mehrwegbehälter können beispielsweise über Permanentmagnete, geschaltet werden.

Alternativ zu obigen Überlegungen kann auch ein separater Lift verbaut sein, der das Shuttle in unterschiedliche Höhen verfahren kann. Der Lift wird durch die mobile Depoteinrichtung mit Energie versorgt und gesteuert und steht mit dem Shuttle in Kommunikation.

Beispielsweise kann das Shuttle auch so auf den Lift auffahren, dass es mit den eigenen Rollen auf am Kragarm des Lifts drehbar gelagert befestigten Rollen des Lifts steht, wie bei einem Rollenprüfstand (TÜV). Bevor das Shuttle seine Greifer ausführt, betätigt es eine Kupplung, die die Welle mit den Rollen einkuppelt. Wenn das Shuttle nun auf der Stelle "vorwärts" oder "rückwärts" fährt, betätigt es über eine Welle ein Ritzel, das den Lift hinauf- oder hinabfahren lässt.

Es ist zudem möglich, das Shuttle frei im Raum navigierbar auszubilden und mehr Aufgaben im Paketverteilungszentrum/Depot zu erfüllen. Auch ist denkbar, dass ein Träger-FTS, das frei im Raum navigieren kann, ein kleineres Satellitenshuttle zur mobilen Depoteinrichtung befördert. Ab hier kann das Shuttle auf der entsprechenden Höhe in die mobile Depoteinrichtung übergeben werden. Der Satellit kann Mehrwegbehälter (beispielsweise Tablare) mit Paketen ein- und auslagern. Es kann beispielsweise ein beladener mit einem unbeladenen Satelliten getauscht werden. Zum Ausgleich von Ungenauigkeiten (Reifendruck, Rampenhöhe und dergleichen) sind in der mobilen Depoteinrichtung Barcodes zur Orientierung angebracht. Auch kann eine Fixierungsmöglichkeit vorgesehen sein, die es dem FTS erlaubt, Satelliten stabil ein- und auslagern zu können.

Gemäß einer Ausführungsform der Erfindung ist die mobile Depoteinrichtung eingerichtet, dass die Pakete auf Mehrwegbehältern in die Lagerpositionen eingebracht werden können, wobei die Lagerpositionen zur Seite der Beladegasse so geöffnet sind, dass ein Mehrwegbehälter in sie eingeschoben und so arretiert werden kann, dass der Mehrwegbehälter im Abholmodus nicht entnommen werden kann. Dazu ist es möglich, dass die Lagerpositionen eine an den Seiten der Lagerpositionen verlaufende Nut, in die ein Rand der Mehrwegbehälter eingeschoben werden kann, aufweisen, wobei die Nut vorzugsweise nur zur Beladegasse hin offen ist. So kann im Depotmodus das Shuttle oder der Werker die Mehrwegbehälter zwar in die Lagerpositionen einschieben, ein Empfänger oder Kunde im Abholmodus den Mehrwegbehälter jedoch nicht entnehmen. So wird die Rücklaufquote der Mehrwegbehälter besonders hoch gehalten.

Gemäß einer Weiterbildung voriger Überlegung weisen die Mehrwegbehälter einen elektronisch steuerbaren Schließmechanismus in Richtung der zweiten Seite aufweisen. Bei dieser Ausbildung entfällt die Notwendigkeit weiterer Türen/Scharniere, da die Mehrwegbehälter selbst öffenbar sind.

Gemäß einer Weiterbildung der Erfindung wird die Zuordnung anhand eines Optimierungsalgorithmus kalkuliert, wobei wenigstens ein Paketidentifikationsmerkmal berücksichtigt wird. Insbesondere Gewicht, Höhe und ID der Pakete sind entscheidende Paketidentifikationsmerkmale, die hierbei berücksichtigt werden sollten.

Gemäß einer Weiterbildung der Erfindung sind die Regalreihen rückseitig mit wenigstens einer Schließvorrichtung ausgestattet, mit der sie abgeschlossen werden können. Insbesondere kann es sich bei der Schließvorrichtung um ein Rollo handeln. So wird auf besonders einfache Weise verhindert, dass im Abholmodus ein Empfänger oder Kunde zusätzlich zu der ihm zugeordneten Lagerposition auch Zugriff auf eine rückseitig anliegende Lagerposition erhält.

Gemäß einem weitere Aspekt der Erfindung wird ein Verfahren zum Betreiben einer mobilen Depoteinrichtung für eine Lagerung und Bereitstellung mehrerer Pakete innerhalb eines vorgesehenen Übergabezeitraums an einem Standort bereitgestellt,
bei dem die mobile Depoteinrichtung zur Beladung in einen Depotmodus geschaltet wird und Lagerpositionen mit Paketen insbesondere automatisiert be- und/oder entladen werden und dass die mobile Depoteinrichtung zur Übergabe in einen Abholmodus geschaltet wird, in dem ein Empfänger wenigstens ein Paket aus der Lagerposition entnehmen kann oder ein Paket in die mobile Depoteinrichtung einbringen kann.

Gemäß einer Weiterbildung des Verfahrens gemäß der Erfindung wird eine annähernd optimierte Beladung der Lagerpositionen anhand eines Optimierungsalgorithmus ermittelt und ein Werker bei der Beladung der mobilen Depoteinrichtung durch eines der folgenden Mittel unterstützt:
- Place by light
- LED-Streifen mit 2D-Ansteuerung
- Nummerierung/Farbliche Hervorhebung der Lagerpositionen
- Display mit Karte der Lagerpositionen
- Laser.

### ITEMS

A. Mobile Depoteinrichtung (100) bei der die erste und zweite Seite orthogonal zueinander stehen,
   wobei
   die mobile Depoteinrichtung (100) übereinander angeordnete Lagerpositionsschächte orientiert entlang der zweiten Seite aufweist.
B. Mobile Depoteinrichtung (100) nach Item A,
   wobei
   die Lagerpositionsschächte Rückhalteschienen zum Eingriff in Mehrwegbehälter aufweisen, wobei ein in einem jeweiligen Mehrwegbehälter gelagertes Paket in Richtung der zweiten Seite entnehmbar ist und der Mehrwegbehälter in Richtung der ersten Seite entnehmbar ist.
C. Mobile Depoteinrichtung (100) nach Item A oder B,
   wobei
   die Depoteinrichtung (100) ausfahrbare Standfüße aufweist, die die Depoteinrichtung (100) insbesondere in einem Belademodus neigen, sodass die Depoteinrichtung (100) ein Gefälle von der ersten Seite zur einer ihr gegenüberliegenden Seite aufweist.
D. Mobile Depoteinrichtung (100) nach Item C,
   wobei
   in den Lagerpositionsschächten Rollen angeordnet sind.
E. Mobile Depoteinrichtung (100) nach einem der Items A bis D,
   wobei
   die Depoteinrichtung (100) eine Fördervorrichtung zum Transport von Paketen (500) und/oder Mehrwegbehältern entlang der Lagerpositionsschächte aufweist.
F. Mobile Depoteinrichtung (100) nach Item E,
   wobei
   die Fördervorrichtung eine Schnecke oder ein Förderband umfasst.
G. Mobile Depoteinrichtung (100) nach einem der Items A bis F,
   wobei
   die Depoteinrichtung eine an der ersten Seite angeordnete Einlagerungshilfseinrichtung aufweist, wobei die Einlagerungshilfseinrichtung geeignet ist, ein Paket und/oder einen Mehrwegbehälter an einen Lagerpositionsschacht zu übergeben.
H. Mobile Depoteinrichtung (100) nach Item A bis F,
   wobei
   die Depoteinrichtung an der ersten Seite mit einer Einlagerungshilfseinrichtung verbindbar ist, wobei die Einlagerungshilfseinrichtung geeignet ist, ein Paket und/oder einen Mehrwegbehälter an einen Lagerpositionsschacht zu übergeben.
I. Mobile Depoteinrichtung (100) nach Item G oder H,
   wobei
   die Einlagerungshilfseinrichtung eine Schleuse zur Annahme eines Pakets aufweist, wobei die Schleuse vorzugsweise Mittel zur Erfassung wenigstens eines Paketidentifikationsmerkmals aufweist, wobei das Mittel zur Erfassung mit dem Verbindungsmittel und/oder dem Zuordnungsmittel verbindbar ist.
J. Mobile Depoteinrichtung (100) nach einem der Item A bis F,
   wobei
   eine Mehrzahl von Lagerpositionen (200), vorzugsweise alle Lagerpositionen (200), zusammenhängend an der ersten Seite aus der Depoteinrichtung (100) herzausziehbar sind, insbesondere vollständig aus der Depoteinrichtung (100) herausziehbar sind, sodass die Depoteinrichtung in einem Belademodus in einem Few-Shot-Verfahren, insbesondere einem One-Shot-Verfahren, beladen werden kann.
K. Mobile Depoteinrichtung (100) nach einem der vorigen Items,
   wobei
   an der zweiten Seite ein 2D-Rollo angeordnet ist, wobei das 2D-Rollo geeignet ist, einem Empfänger einzelne Lagerpositionen (200) zu eröffnen.
L. Mobile Depoteinrichtung (100) nach einem der vorigen Items,
   wobei
   einzelne Lagerpositionen (200) und/oder einzelne Mehrwegbehälter einen öffenbaren Verschlussmechanismus aufweisen, wobei der Status des Verschlussmechanismus abhängig von einer Authentifizierung eines Empfängers schaltbar ist.
M. Verfahren zum Betreiben einer mobilen Depoteinrichtung (100) nach einem der vorigen Items,
   wobei
   in einem Belademodus an der ersten Seite der Depoteinrichtung (100) Pakete (500) an die Depoteinrichtung übergeben werden und in entlang von zweiten Seiten verteilten Lagerpositionen (200) eingelagert werden, wobei jede einem Paket (500) zugeordnete Lagerposition (200) gespeichert wird,
   wobei in einem Entnahmevorgang die Depoteinrichtung (100) einem Empfänger ein Paket (500) an einer zweiten Seite zugänglich macht.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine Ansicht von oben auf eine Depoteinrichtung, wobei Teile der Depoteinrichtung ausgeblendet sind,
- Fig. 2: eine Ansicht auf eine erste Seite einer Depoteinrichtung,
- Fig. 3: eine Ansicht auf eine zweite Seite einer Depoteinrichtung in einem Belademodus,
- Fig. 4: eine Ansicht auf Lagerpositionsschächte mit einer Fördervorrichtung,
- Fig. 5: eine Ansicht auf eine zweite Seite einer Depoteinrichtung in einem Belademodus,
- Fig. 6: eine Ansicht auf eine zweite Seite einer Depoteinrichtung mit einer Einlagerungshilfseinrichtung,
- Fig. 7: eine Ansicht auf eine zweite Seite einer Depoteinrichtung mit einem 2D-Rollo,
- Fig. 8a: eine Anordnung von Paketen auf Tablaren,
- Fig. 8b: eine Anordnung von Paketen auf Mehrwegbehältern,
- Fig. 9a-9b: eine Regalanordnung von Lagerpositionen,
- Fig. 10a-10c: eine mobile Depoteinrichtung in einem Depotmodus und
- Fig. 11a-11c: eine mobile Depoteinrichtung in einem Abholmodus.

Mit der in dieser Anmeldung vorgeschlagenen und in den folgenden Zeichnungen näher konkretisierten Topologie einer Depoteinrichtung 100 lässt sich ein sehr geringes Systemgewicht erzielen. Beispielsweise kann auf bewegliche Antriebseinheiten vollständig verzichtet werden und mit Einsatz leichter Materialien, insbesondere beim Bau der Lagerpositionsschächte und der Verkleidung, bleibt das Gesamtgewicht der Depoteinrichtung 100 deutlich unterhalb 1.500 kg. Dies erlaubt einen Transport mit einem normalen Anhängerfahrzeug, sogar unter der Führerscheinklasse B96, und erleichtert nicht nur die Logistik, sondern reduziert auch die Anschaffungskosten für das Fahrzeuggespann erheblich.

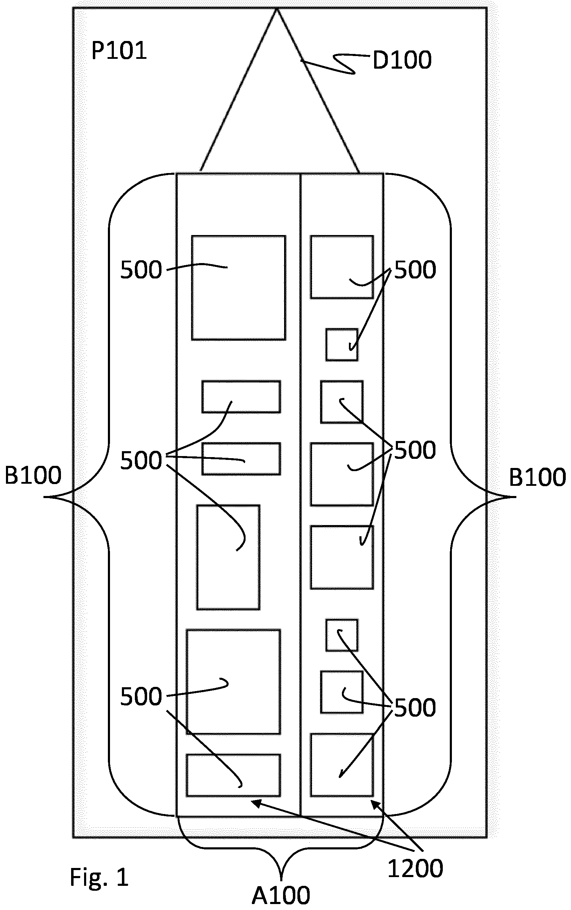

Die in Figur 1 gezeigte Depoteinrichtung 100 weist eine Doppelseitenstruktur auf. Es ist bei dieser Ausbildungsform möglich, auf zwei zweiten Seiten B100 auf jeweilige Lagerpositionen zuzugreifen. Die mobile Depoteinrichtung 100 ist hier durch einen Anhänger mit einer Deichsel D100 ausgebildet, der auf einem Parkplatz P101 abgestellt wurde. Die erfindungsgemäße Depoteinrichtung 100, bei der die Lagerpositionen von einer ersten Seite A100 aus mit Paketen 500 befüllt werden, zeigt hier den Vorteil, dass sie besonders platzsparend gebaut werden kann. Mit dieser Ausbildung ist es möglich, die Depoteinrichtung so schmal zu bauen, dass Empfänger auf einem normalen Parkplatz P101 von der (zweiten) Seite an ihre Pakete 500 gelangen können. Dies erhöht die Flexibilität bei der Wahl der Übergabeorte der Depoteinrichtung und erlaubt es, insbesondere in städtischen Ballungsräumen mit einem Standardparkplatz auszukommen bei komfortabler Übergabe der Pakete 500 an die Empfänger mit ausreichend Platz, ohne dass Beschädigungen auf benachbarten Parkplätzen stehender Fahrzeuge befürchtet werden müssen. Die Depoteinrichtung weist ein Verbindungsmittel 120 zum Verbinden der Depoteinrichtung 100 mit einem Zuordnungsmittel 300 für eine Zuordnung von Paketidentifikationsmerkmalen zu Lagerpositionen 200 auf. Die in Figur 1 gezeigte Depoteinrichtung, bei der eine Decke der Einrichtung ausgeblendet wurde, ist in der gezeigten Ebene vollständig mit Paketen 500 befüllt. Das heißt, jedes Paket 500 nimmt eine Lagerposition 200 in einem jeweiligen Lagerpositionsschacht 1200 ein. Die Breite der mobilen Depoteinrichtung 100 liegt beispielsweise zwischen 1,10 m und 1,30 m. Die Breite der Lagerpositionsschächte ist hier beispielsweise unterschiedlich und zielt darauf ab, bei statistischer Paketgrößenverteilung, den verfügbaren Raum möglichst gut auszunutzen. Die Länge der Depoteinrichtung inklusive der Deichsel D100 überschreitet hier nicht die typische Länge eines Parkplatzes P101 von 5m. Die Lagerpositionsschächte 1200 können beispielsweise aus extrudierten Blechteilen gefertigt sein.

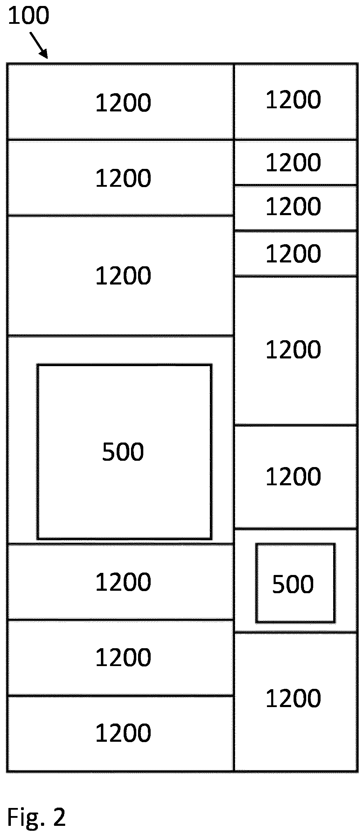

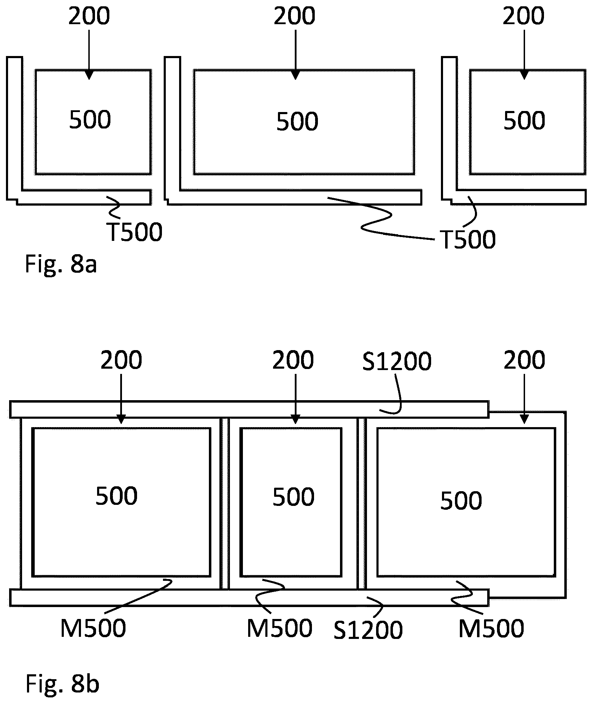

Die Lagerpositionen 200, insbesondere die Lagerpositionsschächte 1200, sind in mehreren Ebenen übereinander angeordnet, wie in Figur 2 dargestellt. Hier ist eine Ansicht auf die erste Seite A100 einer Depoteinrichtung 100 gezeigt, von wo aus sie beladen werden kann. Zwei unterschiedlich große Pakete 500 sind in zwei der Lagerpositionsschächte 1200 bereits eingebracht. Es ist möglich, die Pakete 500 auf Tablaren T500 oder Mehrwegbehältern (Mehrwegtransportverpackungen MTVs) M500 in die Depoteinrichtung einzubringen (siehe auch Figur 8a, 8b). Die Höhe der Lagerpositionen 200 bzw. Lagerpositionsschächte 1200 ist so gewählt, dass sie die statistische Verteilung der Pakete 500 widerspiegelt.

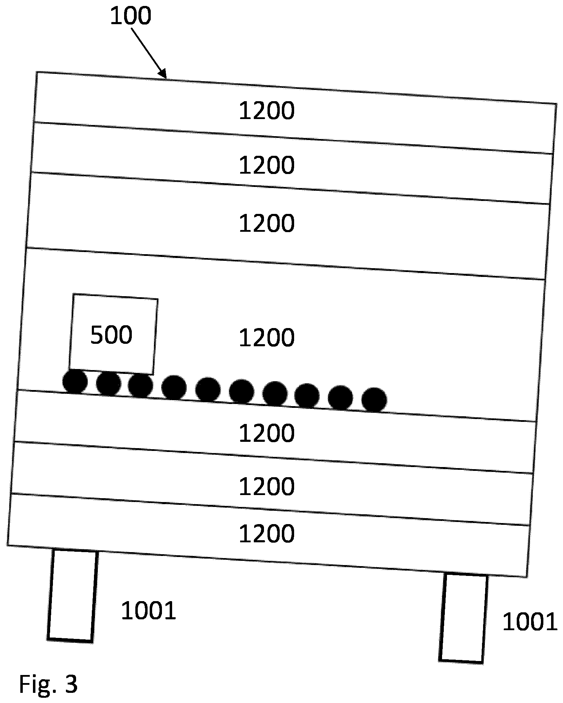

In Figur 3 ist eine Depoteinrichtung 100 in einem Belademodus dargestellt. Die Depoteinrichtung 100 steht unterseitig auf ein- und ausfahrbaren Standfüßen 1001. Während eines Beladevorgangs wird der der ersten Seite A100 zugewandte Standfuß 1001 weiter ausgefahren als der Standfuß 1001, der von der ersten Seite A100 weiter entfernt liegt. Im mittleren Lagerpositionsschacht 1200 sind optionale Rollen R1200 gezeigt. Das eingebrachte Paket 500 wird nun aufgrund der Gravitationskraft entlang des Lagerpositionsschachts 1200 rollen (oder rutschen), bis es zum Halten kommt. Es ist selbstverständlich auch möglich, angetriebene Rollen (oder auch ein Förderband) als Teil einer aktiven Fördervorrichtung 1500 auf dem Boden der Lagerpositionsschächte 1200 zu verwenden.

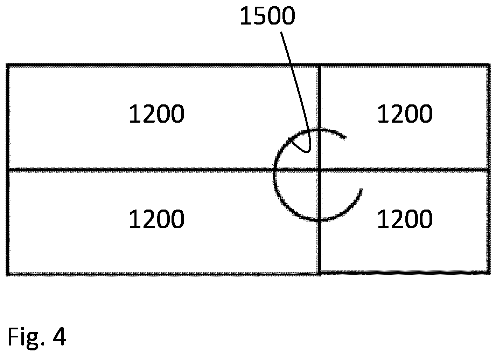

In Fig. 4 ist jedoch eine bevorzugte Ausbildung einer Fördervorrichtung 1500 gezeigt, bei der eine Schnecke durch Drehbewegung in vier Lagerpositionsschächten 1200 simultan Pakete 500 entlang der Schächte 1200 transportieren kann.

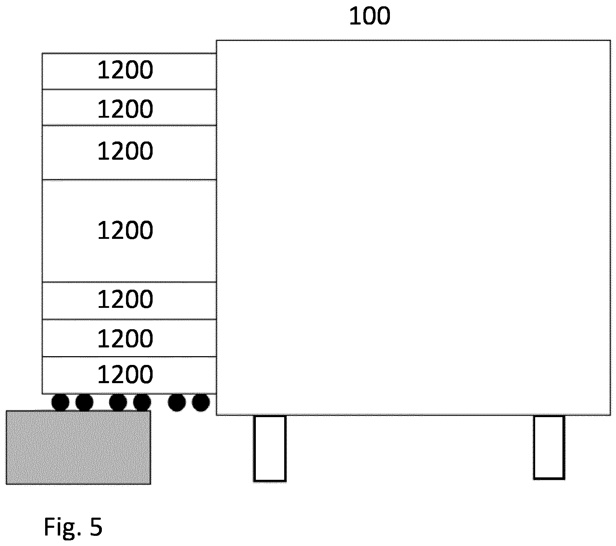

Alternativ zu diesen Beladevorgängen ist es möglich, die Lagerpositionen 200, insbesondere Lagerpositionsschächte 1200 im Ganzen aus der Depoteinrichtung 100 hinauszuziehen. In dem in Figur 5 gezeigten Beispiel sind die Lagerpositionsschächte 1200 regalartig angeordnet und auf Rollen gelagert, um sie besonders leicht manövrieren zu können. Statt im Ganzen können auch einzelne Lagerpositionsschächte 1200 in Gruppen zusammengefasst sein, um die Handhabbarkeit zu erhöhen. Diese Variante erleichtert gerade den manuellen Beladevorgang durch den leichten Zugriff auf die Lagerpositionen 200 von mehreren Seiten.

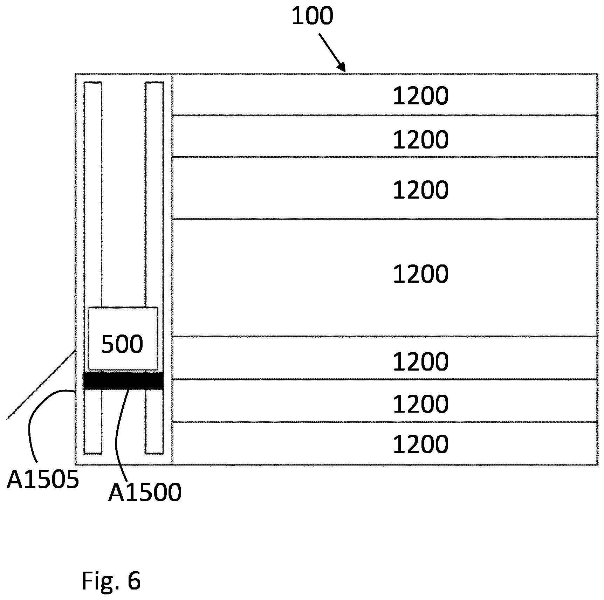

In Figur 6 ist eine Einlagerungshilfseinrichtung A1500 gezeigt, die die einzelnen Lagerpositionsschächte 1200 ansteuern kann. Diese Einrichtung A1500 ist insbesondere mit den in Figur 3 und Figur 4 gezeigten Erleichterungen bei der Beladung der erfindungsgemäßen Depoteinrichtung 100 kombinierbar und erhöht die Ergonomie der Anordnung weiter. Figur 6 zeigt dabei eine Ansicht auf die zweite Seite B100 der Depoteinrichtung 100. Die Einlagerungshilfseinrichtung A1500 weist eine Schleuse A1505 auf, an der Pakete 500 eingebracht werden können. Die Einlagerungshilfseinrichtung A1500 ist in ihrer Höhe verfahrbar und kann auch seitlich zwischen den Lagerpositionsschächten 1200 hin- und herfahren, wobei es selbstverständlich auch möglich ist, mehrere Einlagerungshilfseinrichtungen A1500, also eine für jeden Lagerpositionsschacht 1200, zu verwenden. Die Einlagerungshilfseinrichtung A1500 kann entweder Teil der Depoteinrichtung 100 sein oder die Depoteinrichtung 100 kann so nah an die Einlagerungshilfseinrichtung A1500 herangefahren werden, insbesondere mit der Einlagerungshilfseinrichtung A1500 verbunden werden, dass sie miteinander zusammenwirken können. Die Einlagerungshilfseinrichtung A1500 bringt, nachdem sie ein Paket 500 an der Schleuse A1505 entgegengenommen hat, das Paket in einen jeweiligen Lagerpositionsschacht 1200 ein. Von dort wird es beispielsweise über einen der zuvor beschriebenen Wege in seine Lagerposition 200 gebracht. Eine fest mit der Depoteinrichtung 100 verbaute Einlagerungshilfseinrichtung 1500 bietet den Vorteil, dass es die Depoteinrichtung 100 auch für Retouren nutzbar macht. Die Schleuse A1505 kann beispielsweise die Möglichkeit bieten, eine eingebrachte Ware (ein Paket 500) zu fotografieren, zu wiegen und abzumessen. Retournierte Pakete 500 können in der Depoteinrichtung in den obersten Lagerpositionsschächten 1200 gelagert werden, da hier ein seitlicher Zugang (B100) nicht erforderlich ist.

Beim Befüllen der mobilen Depoteinrichtung 100 werden die Pakete 500 registriert und eine LED kann einem Depotmitarbeiter anzeigen, in welchen Lagerpositionsschacht 1200 ein Paket 500 insbesondere auf einem Tablar T500 oder in einem Mehrwegbehälter M500 eingeschoben werden soll. Alternativ geschieht dies mithilfe der Einlagerungshilfseinrichtung A1500 (teilweise oder voll-)automatisiert. In einer mit dem Zuordnungsmittel 300 verbundenen Datenbank wird dann entsprechend die Position und die Paket-, Tablar- oder Mehrwegbehältergröße gespeichert.

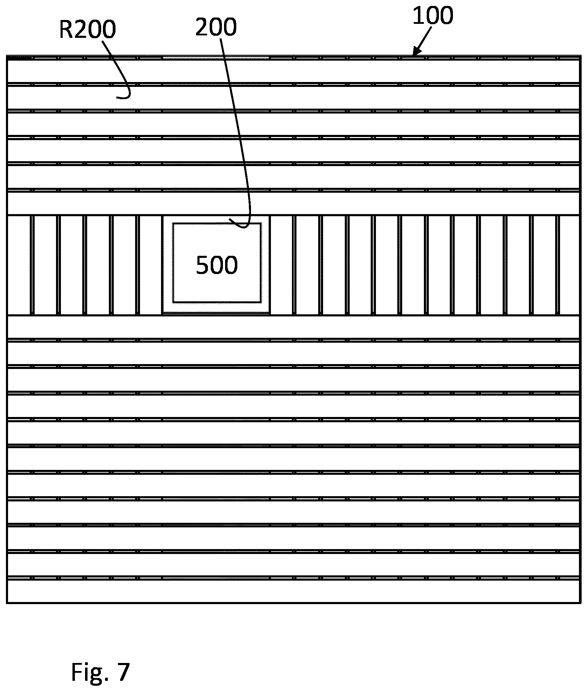

Figur 7 zeigt eine Ansicht auf die zweite Seite B100 einer Depoteinrichtung 100 mit einem 2D-Rollo R200. Es besteht aus je zwei horizontalen und vertikalen Rollos, mit denen an beliebiger Stelle ein Ausschnitt zu einer Lagerposition 200 erzeugt werden kann. Ein Empfänger kann das Öffnen der Rollos R200 beispielsweise über eine App oder ein Identifikationsmedium wie Near Field Communication (NFC) veranlassen, vorausgesetzt, der Empfänger kann identifiziert werden und ist hierzu berechtigt. Das 2D-Rollo R200 erhält über das Verbindungsmittel 120 jeweils Information, an welcher Stelle und wie groß die Öffnung für den Empfänger sein soll, damit dieser reibungslos sein Paket 500 erhalten kann.

In Figur 8a und 8b sind zwei bevorzugte Varianten der Befüllung der Lagerpositionsschächte 1200 gezeigt. Figur 8a zeigt L-förmige Tablare T500, die einen Durchgriff auf nebenliegende Pakete 500 verhindern. Falls die Lagerpositionsschächte 1200 rückwärtig nicht durch Trennwände voneinander getrennt sind, weisen die Tablare T500 selbst eine hier nicht dargestellte Rückwand auf. Figur 8b zeigt ferner Mehrwegbehälter M500, die mittels Rückhalteschienen S1200 vor einer Entnahme durch einen Empfänger gesichert sind. Vorzugsweise weisen die Mehrwegbehälter M500 noch einen hier nicht dargestellten mit dem jeweiligen Mehrwegbehälter M500 beispielsweise über ein Scharnier verbundenen Deckel auf.

Die Verwendung von Tablaren T500 und Mehrwegbehältern M500 vordefinierter Größen erlaubt eine erleichterte Implementierung, da beispielsweise das 2D-Rollo R200 eine vordefinierte Öffnung anfahren kann.

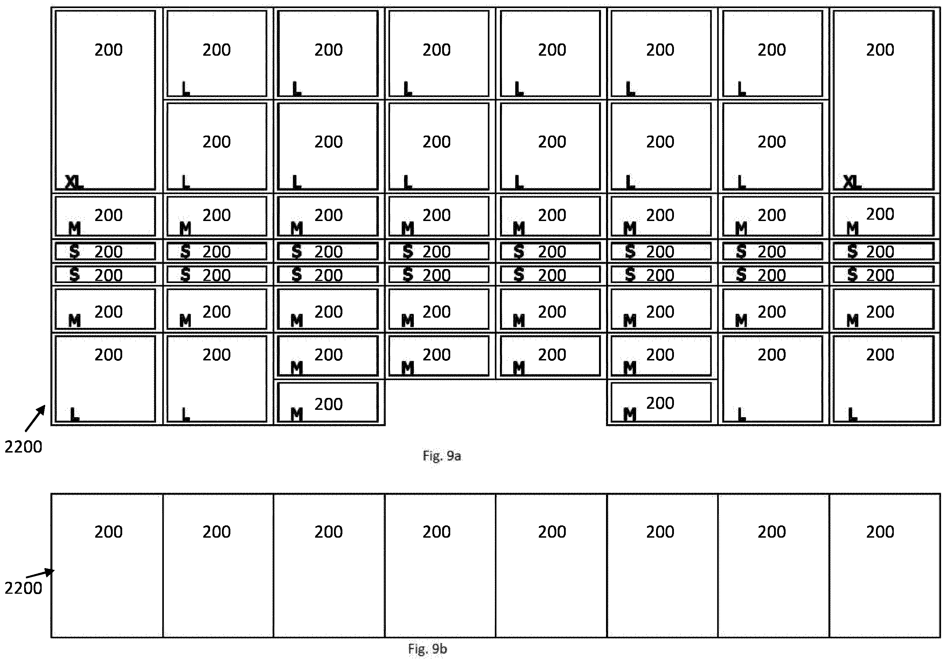

In Figur 9a ist eine Regalreihe 2200 in einer Seitenansicht dargestellt. Die Lagerpositionen 200 sind regalartig angeordnet. Die Lagerpositionen 200 sind hier nach vier Größen (S, M, L, XL) unterteilt. Es ist jedoch ebenso vom erfinderischen Gedanken mitumfasst, die Lagerpositionen 200 größer oder kleiner auszubilden. Wie Figur 9b in einer Ansicht von oben in die Regalreihe 2200 zeigt, weisen alle Lagerpositionen 200 eine gemeinsame Tiefe auf. Dies stellt zwar keine zwingende Maßnahme dar. Es ermöglicht jedoch die besonders einfache Realisierung einer Beladegasse G2200, wie im Folgenden beschrieben. Lagerpositionen 200 können über eine Tür geöffnet werden. Nach voriger Authentifikation eines Empfängers 550 (oder Bezahlung oder Authentifikation eines Kunden), beispielsweise über einen QR-Code an einem nicht dargestellten Scanner der mobilen Depoteinrichtung 100, wird die zur Lagerposition 200 zugehörige Tür entsperrt, sodass der Empfänger 550 (oder Kunde) Zugriff auf sein Paket 500 erhält.

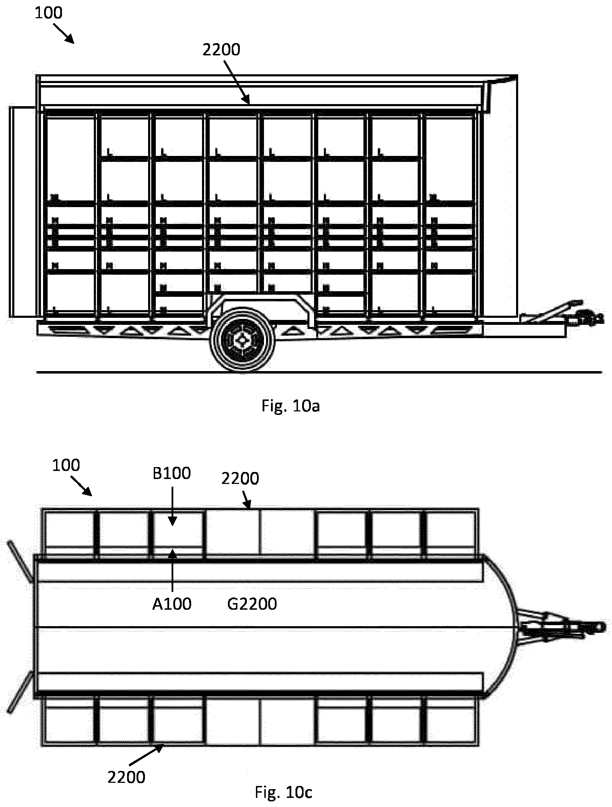

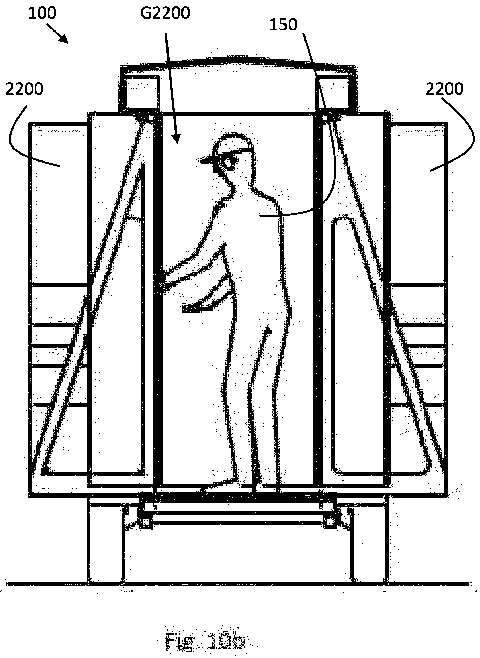

In Figur 10a bis 10c ist eine mobile Depoteinrichtung 100 im Depotmodus dargestellt. Beispielsweise ist die Aufteilung der Lagerpositionen 200 unterschiedlicher Größen als Regalreihe 2200 wie in Bezug zu Figur 9 beschrieben. Die mobile Depoteinrichtung 100 ist beispielsweise in einem Paketverteilungszentrum aufgestellt. Sie weist zwei parallel ausgerichtete Regalreihen 2200 auf, die im Depotmodus so voneinander beabstandet sind, dass zwischen ihnen eine Beladegasse G2200 entsteht (Fig. 10c). Wie Figur 10b zeigt, kann ein Werker 150 in der Beladegasse G2200 auf vorbeschriebene Weise instruiert werden, Pakete 500 in zugeordnete Lagerpositionen 200 einzulagern. Es ist jedoch auch möglich, dass die Zuordnung dem Werker 150 überlassen bleibt und insbesondere dass die mobile Depoteinrichtung 100 über Mittel zur Erfassung des Belegungszustands einer Lagerposition 200 und eines Paketidentifikationsmerkmals verfügt, wobei die mobile Depoteinrichtung 100 damit eine durch den Werker 150 eigenmächtig gewählte Zuordnung erfasst und speichert.

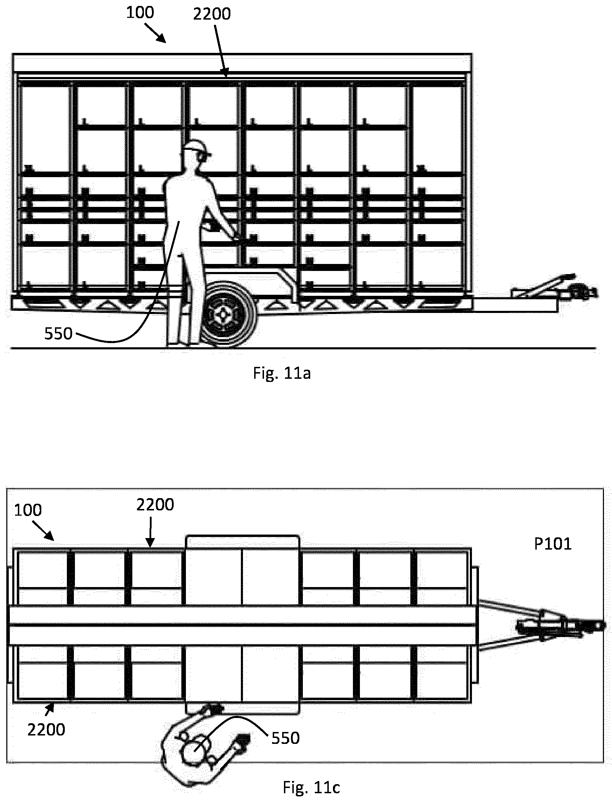

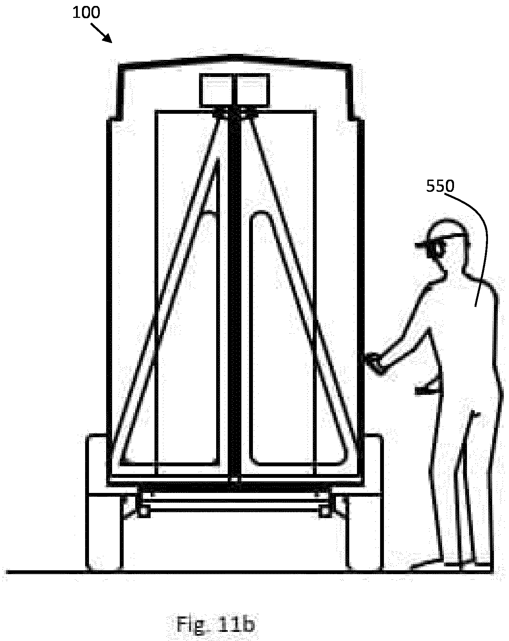

In Figur 11a bis 11c ist eine mobile Depoteinrichtung 100 im Abholmodus gezeigt. Ein Empfänger 550 (oder Kunde) nähert sich von außen der Depoteinrichtung 100, um sein Paket 500 abzuholen. Die Regalreihen 2200 sind im Abholmodus rückseitig aneinander (nahezu) anliegend angeordnet. Beispielsweise ist zwischen den Regalreihen 2200 auf der Rückseite ein Trenngitter oder ein Rollo angeordnet, das ein Übergreifen in benachbarte Lagerpositionen 200 der anliegenden Regalreihe 2200 verhindert. Die besonders platzsparende Ausbildung im Abholmodus erlaubt die Aufstellung der mobilen Depoteinrichtung 100 auf gewöhnlichen Parkplätzen P101 (Fig. 11c), wobei bei Entladevorgängen, selbst bei großen Paketen 500 in XL-Lagerpositionen, keine Beschädigung von benachbart stehenden Fahrzeugen zu besorgen ist. Beispielsweise weist die Depoteinrichtung 100 ein nicht dargestelltes Benutzerterminal auf, an dem sich ein Empfänger 550 authentifizieren kann.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 100: Mobile Depoteinrichtung
- 120: Verbindungsmittel
- 150: Werker
- 200: Lagerposition
- 300: Zuordnungsmittel
- 2200: Regalreihe
- G2200: Beladegasse
- A100: Erste Seite
- B100: Zweite Seite
- 1200: Einlagerungsschacht
- P101: Parkplatz
- D100: Deichsel
- 1500: Fördervorrichtung
- A1500: Einlagerungseinrichtung
- A1505: Schleuse
- R200: 2D-Rollo
- S1200: Schienen
- 500: Paket
- 550: Empfänger
- M500: Mehrwegbehälter
- T500: Tray / Tablar (L-förmig)
- 1001: Standfüße
- R1200: Rollen

## Patentansprüche

1. Mobile Depoteinrichtung (100) für eine Lagerung und Bereitstellung mehrerer Pakete (500) innerhalb eines vorgesehenen Übergabezeitraums an einem Standort, mit
- einer Vielzahl von Lagerpositionen (200),
- einem Verbindungsmittel (120) zum Verbinden der Depoteinrichtung (100) mit einem Zuordnungsmittel (300) für eine Zuordnung von Paketidentifikationsmerkmalen zu Lagerpositionen (200),
**dadurch gekennzeichnet, dass**
die mobile Depoteinrichtung (100) von einer ersten Seite (A100) beladbar ist und dass die Pakete (500) je von einer zweiten Seite (B100), entnehmbar sind, wobei die zweite Seite (B100) verschieden von der ersten Seite (A100) ist,
wobei die mobile Depoteinrichtung (100) zwischen einem Depotmodus zur Be- und Entladung, insbesondere durch wenigstens einen Werker (150), und einem Abholmodus, in dem wenigstens ein Paket (500) an einen Empfänger (550) oder Kunden übergeben wird, schaltbar ist.

2. Mobile Depoteinrichtung (100) nach Anspruch 1,
**dadurch gekennzeichnet, dass** die Lagerpositionen (200) zwei gegeneinander verschiebbare Regalreihen (2200) bilden, wobei die Regalreihen (2200) in dem Abholmodus rückseitig nah beieinander, insbesondere aneinander anliegend, angeordnet sind und wobei die Regalreihen (2200) in dem Depotmodus so voneinander beabstandet sind, dass eine Beladegasse (G2200) entsteht, wobei die Lagerpositionen (200) von der Seite der Beladegasse (G2200) aus befüllbar sind.

3. Mobile Depoteinrichtung (100) nach Anspruch 2,
**dadurch gekennzeichnet, dass** die Beladegasse (G2200) im Depotmodus begehbar ist und ein Werker (150) die Pakete (500) manuell in die Lagerpositionen (200) einlagern kann, wobei die Zuordnung von Paketidentifikationsmerkmalen zu Lagerpositionen (200) erfasst wird.

4. Mobile Depoteinrichtung (100) nach Anspruch 2 oder 3,
**dadurch gekennzeichnet, dass** die Lagerpositionen (200) Mittel zur Erfassung des Beladungszustands aufweisen, wobei es sich bei den Mitteln zur Erfassung insbesondere um eine Kamera, insbesondere unterstützt durch Machine Vision, eine Lichtschranke, eine Waage oder einen Bewegungssensor handelt.

5. Mobile Depoteinrichtung (100) nach Anspruch 3 oder 4,
**dadurch gekennzeichnet, dass** die mobile Depoteinrichtung (100) den Paketen (500) zugeordnete Lagerpositionen (200) erhält oder ermittelt, insbesondere wobei die mobile Depoteinrichtung (100) über wenigstens eines der folgenden Mittel zur Anzeige der Zuordnung verfügt:
- Place by light
- LED-Streifen mit 2D-Ansteuerung
- Nummerierung/Farbliche Hervorhebung der Lagerpositionen (200)
- Display mit Karte der Lagerpositionen (200)
- Laser.

6. Mobile Depoteinrichtung (100) nach Anspruch 2,
**dadurch gekennzeichnet, dass** ein Shuttle in die Beladegasse (G2200) fahren kann, wobei das Shuttle insbesondere automatisiert Pakete (500) in die Lagerpositionen (200) anhand der Zuordnung einbringen kann.

7. Mobile Depoteinrichtung (100) nach Anspruch 6,
**dadurch gekennzeichnet, dass** das Shuttle in einer Höhe verfahrbar ist.

8. Mobile Depoteinrichtung (100) nach Anspruch 7,
**dadurch gekennzeichnet, dass** das Shuttle im Depotmodus nicht aus der Beladegasse (G2200) fährt und ein Eingang zur Beladegasse (G2200) als eine Schleuse zur Annahme der einzulagernden Pakete (500) und/oder zur Ausgabe von nicht abgeholten Paketen (500) und/oder Retouren durch das Shuttle dient, insbesondere wobei das Shuttle über Sensorik zur Erfassung der Schleuse verfügt und eingerichtet ist, verkippungs-, verrollungs- und beladungsbedingte Höhenschwankungen auszugleichen.

9. Mobile Depoteinrichtung (100) nach einem der Ansprüche 2 bis 8,
**dadurch gekennzeichnet, dass** die Pakete (500) auf Mehrwegbehältern (M500) in die Lagerpositionen (200) eingebracht werden, wobei die Lagerpositionen (200) zur Seite der Beladegasse (G2200) so geöffnet sind, dass ein Mehrwegbehälter (M500) in sie eingeschoben und so arretiert werden kann, dass der Mehrwegbehälter (M500) im Abholmodus nicht entnommen werden kann.

10. Mobile Depoteinrichtung (100) nach Anspruch 9,
**dadurch gekennzeichnet, dass** die Mehrwegbehälter (M500) einen elektronisch steuerbaren Schließmechanismus in Richtung der zweiten Seite (B100) aufweisen.

11. Mobile Depoteinrichtung (100) nach einem der Ansprüche 2 bis 10,
**dadurch gekennzeichnet, dass** die Zuordnung anhand eines Optimierungsalgorithmus kalkuliert wird, wobei wenigstens ein Paketidentifikationsmerkmal (500) berücksichtigt wird.

12. Mobile Depoteinrichtung (100) nach einem der vorigen Ansprüche,
**dadurch gekennzeichnet, dass** die Regalreihen (2200) rückseitig mit wenigstens einer Schließvorrichtung, insbesondere einem Rollo, abgeschlossen werden können.

13. Verfahren zum Betreiben einer mobilen Depoteinrichtung (100) für eine Lagerung und Bereitstellung mehrerer Pakete (500) innerhalb eines vorgesehenen Übergabezeitraums an einem Standort,
**dadurch gekennzeichnet, dass**
die mobile Depoteinrichtung (100) zur Beladung in einen Depotmodus geschaltet wird und Lagerpositionen (200) mit Paketen (500) insbesondere automatisiert beladen werden und
dass die mobile Depoteinrichtung (100) zur Übergabe in einen Abholmodus geschaltet wird, in dem ein Empfänger (550) oder Kunde wenigstens ein Paket (500) aus der Lagerposition (200) entnehmen kann.

14. Verfahren nach Anspruch 13,
**dadurch gekennzeichnet, dass** eine annähernd optimierte Beladung der Lagerpositionen (200) anhand eines Optimierungsalgorithmus ermittelt wird und ein Werker (150) bei der Beladung der mobilen Depoteinrichtung (100) durch eines der folgenden Mittel unterstützt wird:
- Place by light
- LED-Streifen mit 2D-Ansteuerung
- Nummerierung/Farbliche Hervorhebung der Lagerpositionen (200)
- Display mit Karte der Lagerpositionen (200)
- Laser.
